(19) Europäisches Patentamt / European Patent Office / Office européen des brevets

(11) **EP 2 876 385 B1**

(12) **EUROPEAN PATENT SPECIFICATION**

(45) Date of publication and mention
of the grant of the patent:
**04.09.2019  Bulletin 2019/36**

(51) Int Cl.:
*F25B 31/00* (2006.01)          *F25B 49/02* (2006.01)
*F25B 13/00* (2006.01)

(21) Application number: **14194580.8**

(22) Date of filing: **24.11.2014**

(54) **Air conditioner**

Klimaanlage

Climatiseur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.11.2013  JP 2013243961**

(43) Date of publication of application:
**27.05.2015  Bulletin 2015/22**

(73) Proprietor: **MITSUBISHI HEAVY INDUSTRIES
THERMAL SYSTEMS, LTD.
Tokyo 108-8215 (JP)**

(72) Inventors:
• **Fujino, Tetsuji**
  **TOKYO, 108-8215 (JP)**
• **Oishi, Tsuyoshi**
  **TOKYO, 108-8215 (JP)**

(74) Representative: **Intès, Didier Gérard André et al
Cabinet Beau de Loménie
158 rue de l'Université
75340 Paris Cedex 07 (FR)**

(56) References cited:
**EP-A1- 2 314 940          EP-A1- 2 518 422
EP-A1- 2 522 931          WO-A1-2013/001829
US-A1- 2013 247 603**

## Description

{Technical Field}

The present invention relates to an air conditioner in which a controller can be cooled by using a refrigerant pipe that constitutes a refrigeration cycle.

{Background Art}

In air conditioner controllers, there is a demand for enhancing the cooling performance due to an increase in capacity or the like of inverter apparatuses and power devices thereof. Because of this, in the case of air cooling systems that have been employed in the related art, it is necessary to increase the size of cooling fins, resulting in the problem of increasing costs, and so forth. Therefore, cooling systems employing refrigerant are being increasingly employed. For example, Patent Literature 1 provides a system in which a casing accommodating electronic components is thermally coupled with a refrigerant pipe via a cooling jacket interposed therebetween.

Patent Literature 1 discloses a system in which a controller is cooled by thermally coupling the casing of the controller with refrigerant pipes (1) to (4) described below.

(1) A refrigerant pipe between an outdoor heat exchanger and an expansion valve (in which high-pressure liquid refrigerant flows during cooling operation and low-pressure two-phase refrigerant flows during heating operation);
(2) A pipe at an intermediate portion of the outdoor heat exchanger (in which high-pressure two-phase refrigerant flows during cooling operation and high-pressure liquid refrigerant flows during heating operation);
(3) A refrigerant pipe between the expansion valve and an indoor heat exchanger (in which low-pressure two-phase refrigerant flows during cooling operation and high-pressure liquid refrigerant flows during heating operation); and
(4) An intake pipe of a compressor (in which low-pressure gas refrigerant flows both during cooling operation and during heating operation).

Both documents EP 2 518 422 and EP 2 314 940 disclose air conditioners according to the preamble of claim 1.

{Citation List}

{Patent Literature}

{PTL 1} Japanese Unexamined Patent Application, Publication No. 2008-101862

{Summary of Invention}

{Technical Problem}

However, in the case of (1) described above in which the refrigerant pipe can easily be coupled with the controller, because the controller is cooled by using a refrigerant pipe between the outdoor heat exchanger and the expansion valve, that is, by means of the high-pressure liquid refrigerant during cooling operation and the low-pressure two-phase refrigerant during heating operation, when frost forms on the refrigerant pipe during heating operation at a low outdoor air temperature, there is a risk of the pipe being damaged due to freezing caused by the frost formation, malfunctioning occurring, the electronic components being damaged, or the like, due to the drain liquid from the frost dripping onto electronic components provided in the controller.

Similarly, in the case of (3) described above, because the controller is cooled by using the refrigerant pipe between the indoor heat exchanger and the expansion valve, that is, by means of the low-pressure two-phase refrigerant during cooling operation and the high-pressure liquid refrigerant during heating operation, in the case in which the room temperature is low and the pressure is low during cooling operation, there is a risk of condensation occurring on a surface of the refrigerant pipe and malfunctioning occurring, the electronic components being damaged, or the like, due to the drain liquid from the condensation dripping onto the electronic components provided in the controller. In the case in which condensation or frost formation occurs on the refrigerant pipe, there is also a risk of the drain liquid from the condensation or frost formation remaining on the controller, dripping, during operation, onto the electronic components located below, freezing, or the like.

In addition, although the refrigerant pipe is thermally coupled with the casing of the controller with an aluminum cooling jacket interposed therebetween, it is difficult to couple the aluminum cooling jacket and the refrigerant pipe by bringing them into close contact on an assembly line, and thus, they are brought into close contact by applying grease or the like; however there is a problem in that, among others, working on the assembly line while managing the amount of grease to be applied requires complicated tasks.

The present invention has been conceived in light of the above-described circumstances and provides an air conditioner with which it is possible to eliminate the occurrence of condensation when cooling a controller during cooling operation by using a refrigerant pipe in which low-pressure two-phase refrigerant flows, with which it is also possible, even if condensation or frost formation occurs on the refrigerant pipe, to prevent malfunctioning of the controller, damage to electronic components, or the like, due to the drain liquid from condensation or frost dripping thereonto, and, additionally, with which it is possible to easily place the refrigerant pipe in close contact with the controller.

{Solution to Problem}

In order to solve the above-described problems, an air conditioner of the present invention employs the solution recited in appended claim 1.

With the air conditioner according to invention in the air conditioner provided with the controller that is cooled by being in contact with the refrigerant pipe in which the low-pressure two-phase refrigerant whose flow rate is reduced at the electronic expansion valve flows, the condensation-prevention control portion is provided which, when the condition for condensation to occur on the refrigerant pipe that cools the controller is detected, prevents the occurrence of condensation by means of any one of the rotational-speed control of an indoor fan, the rotational-speed control of an outdoor fan, the degree-of-opening control of the electronic expansion valve, and the rotational-speed control of the compressor. Because of this, although there is a risk of condensation occurring on the surface of the refrigerant pipe depending on the operating state because the low-pressure two-phase refrigerant whose flow rate is reduced at the electronic expansion valve flows inside the refrigerant pipe that cools the controller during cooling operation, the occurrence of condensation on the refrigerant pipe when the condition for condensation to occur is detected can be prevented by increasing the refrigerant temperature by performing any one of the rotational-speed control of an indoor fan, the rotational-speed control of an outdoor fan, the degree-of-opening control of the electronic expansion valve, and the rotational-speed control of the compressor by means of the condensation-prevention control portion. Therefore, it is possible to enhance the product quality and reliability by increasing the cooling performance for cooling heat-generating components while preventing the occurrence of malfunctioning, damage to electronic components, or the like, due to drain liquid dripping onto the controller.

In the air conditioner according to the first aspect described above, when performing the control for preventing the occurrence of condensation, with reference to a refrigerant temperature that is set in advance in accordance with the outdoor air temperature or a target temperature of a substitute temperature thereof, the condensation-prevention control portion may sequentially perform the condensation prevention control in which the rotational-speed control of an indoor fan, the rotational-speed control of an outdoor fan, the degree-of-opening control of the electronic expansion valve, and the rotational-speed control of the compressor are performed in this sequence.

With this configuration, when performing the control for preventing the occurrence of condensation, with reference to the target temperature of the refrigerant temperature that is set in advance in accordance with the outdoor air temperature or a target temperature of a substitute temperature thereof, the condensation-prevention control portion sequentially performs the condensation prevention control in which the rotational-speed control of the indoor fan, the rotational-speed control of the outdoor fan, the degree-of-opening control of the electronic expansion valve, and the rotational-speed control of the compressor are performed in this sequence. Because of this, even if there is a risk of condensation occurring on the refrigerant pipe, in which the low-pressure refrigerant whose flow rate is reduced at the electronic expansion valve flows, depending on the operating state during cooling operation, it is possible to increase the refrigerant temperature to a temperature at which condensation does not occur by sequentially executing the condensation prevention control in which the rotational-speed control of an indoor fan, the rotational-speed control of an outdoor fan, the degree-of-opening control of the electronic expansion valve, and the rotational-speed control of the compressor are executed in this sequence, which has a low level of influence on the cooling capacity. Therefore, it is possible to reliably prevent the occurrence of condensation on the refrigerant pipe and it is possible to protect the controller, the electronic components, or the like from the drain liquid dripping thereonto.

{Advantageous Effects of Invention}

With an air conditioner according to the present invention, although there is a risk of condensation occurring on the surface of a refrigerant pipe during cooling operation depending on the operating state because low-pressure two-phase refrigerant whose flow rate is reduced at an electronic expansion valve flows inside a refrigerant pipe that cools a controller, and because the occurrence of condensation on the refrigerant pipe when a condition for condensation to occur is detected can be prevented by increasing the refrigerant temperature by performing any one of the rotational-speed control of an indoor fan, the rotational-speed control of an outdoor fan, the degree-of-opening control of the electronic expansion valve, and the rotational-speed control of the compressor by means of the condensation-prevention control portion, it is possible to enhance the product quality and reliability by increasing the cooling performance for cooling heat-generating components while preventing the occurrence of malfunctioning, damage to electronic components, or the like, due to the drain liquid dripping onto the controller.

With the air conditioner of the present invention, although it is difficult to place the refrigerant pipe in close contact with an aluminum block on an assembly line, which is placed in contact with the heat-generating components of the controller, because it is possible to relatively easily place the refrigerant pipe in close contact with the aluminum block by placing the two divided parts, that is, the first block and the second block, in close contact with the heat-generating components and the refrigerant pipe, respectively, thus subassembling them in advance, and by assembling the first block and the second block into a single unit on the assembly line, it is possible to enhance the heat conducting efficiency by reducing the thermal contact resistance of the refrigerant pipe with respect to the aluminum block, and it is possible to enhance the product quality and reliability by increasing the cooling performance for cooling the controller and the heat-generating components thereof.

With the air conditioner of the present invention, even if condensation or frost formation occurs on the surface of the refrigerant pipe depending on the operating state, because the drain liquid from the condensation or frost can quickly be expelled in a specific direction along the inclination of the refrigerant pipe that is placed at an angle, it is possible to prevent the drain liquid from remaining on the controller, and it is also possible to protect the controller by preventing the occurrence of malfunctioning, damage to the electronic components, or the like, due to the drain liquid dripping onto the electronic components.

With the air conditioner of the present invention, even if condensation or frost formation occurs on the surface of the refrigerant pipe depending on the operating state, the drain liquid from the condensation or frost does not drip onto other electronic components because no electronic components are placed in a lower portion below the heat-generating components, and therefore, it is possible to protect the controller by preventing the occurrence of malfunctioning, damage to the electronic components, or the like, due to the drain liquid dripping onto other electronic components provided in the controller.

{Brief Description of Drawings}

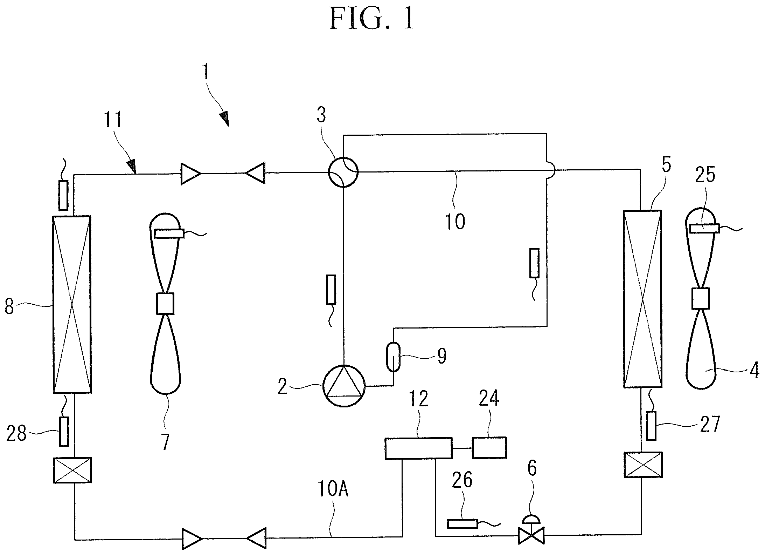

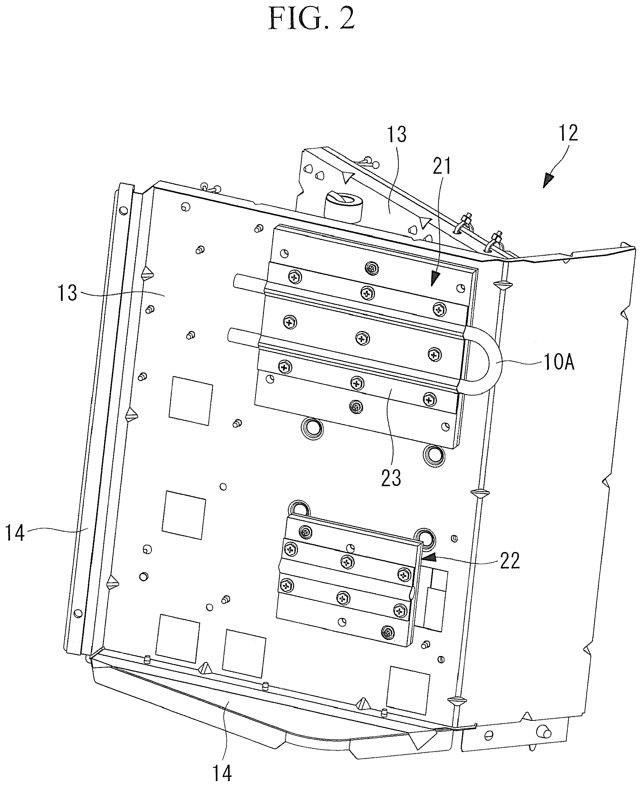

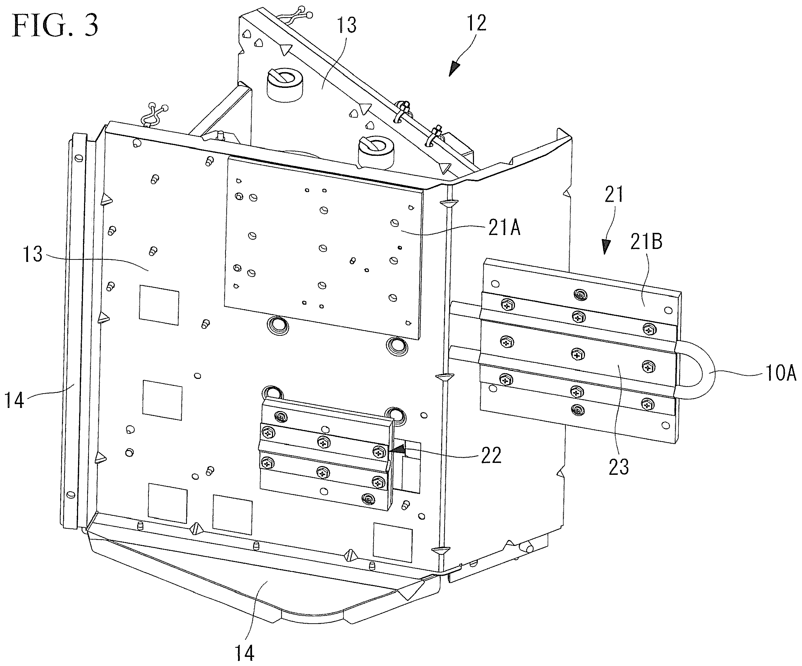

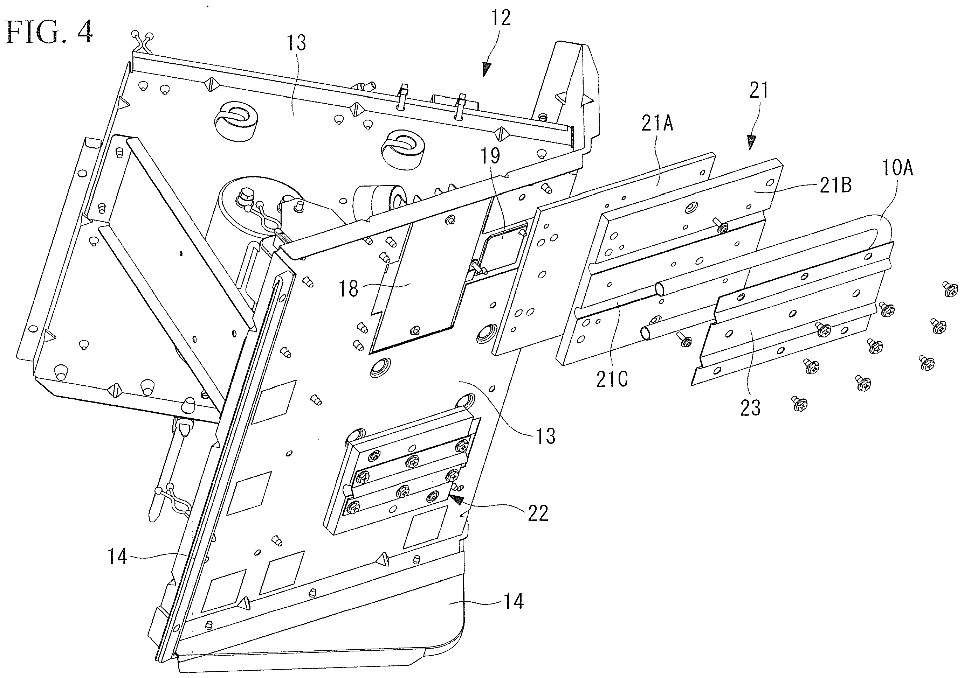

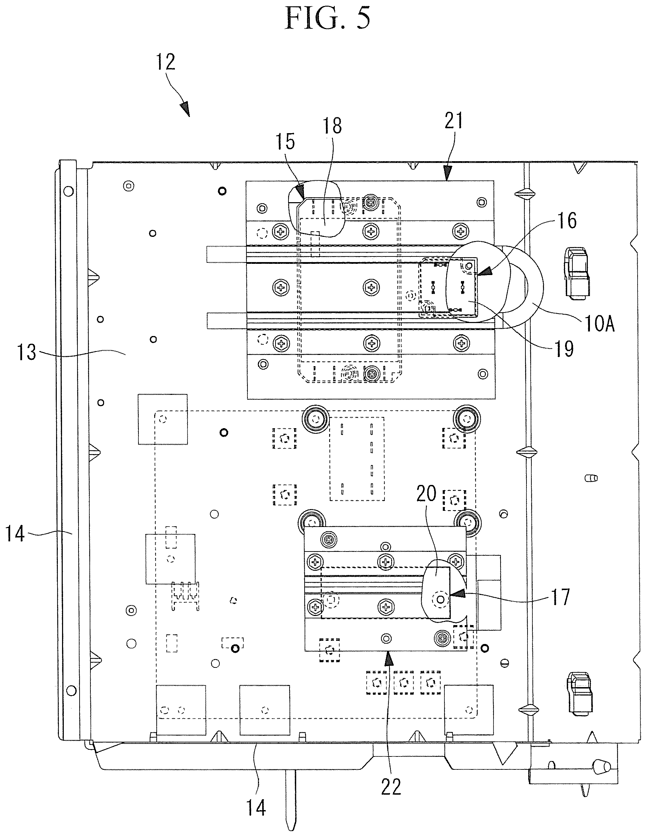

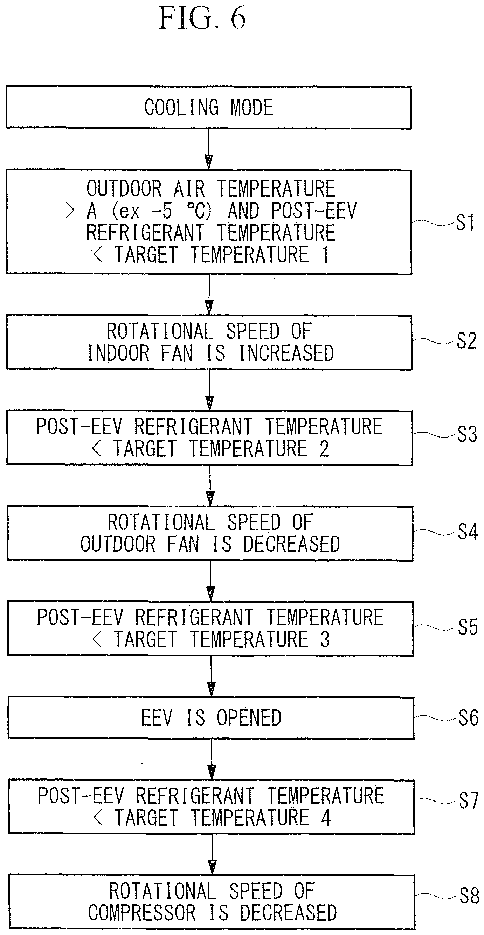

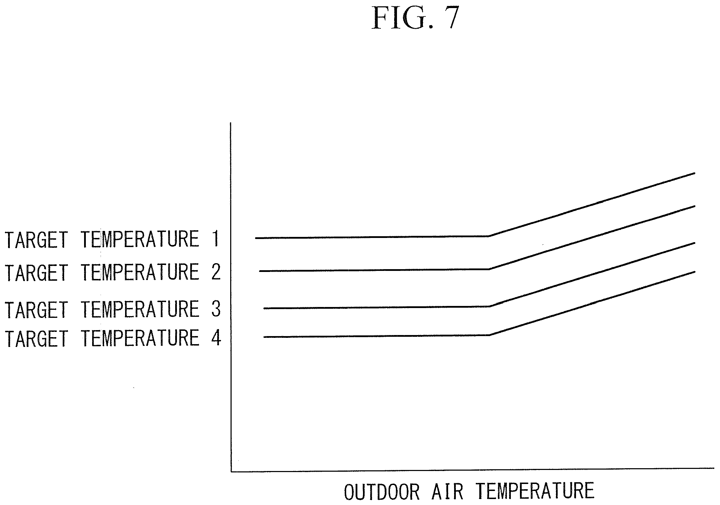

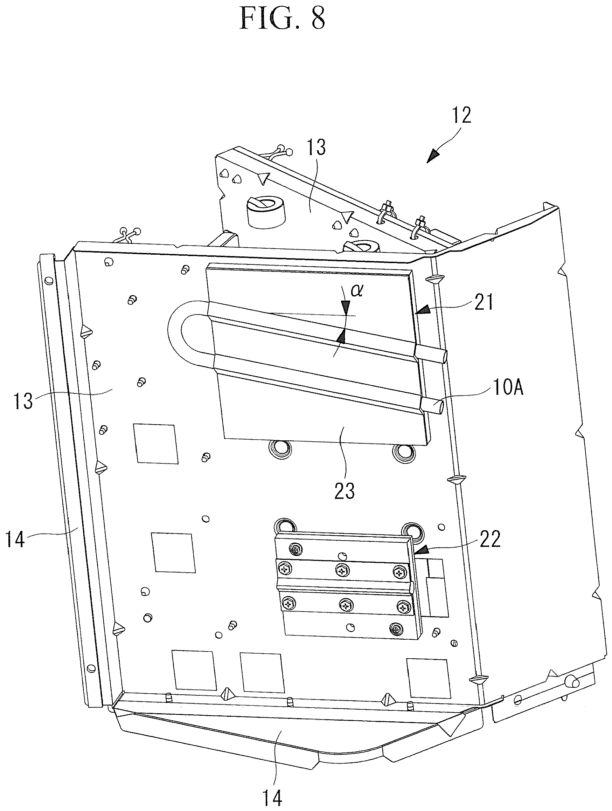

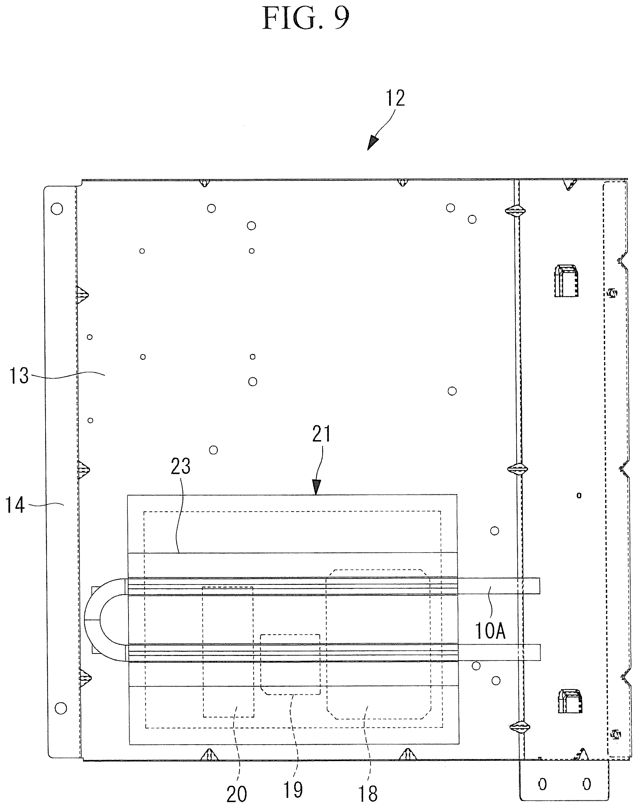

{Fig. 1} Fig. 1 is a diagram showing a refrigeration cycle of an air conditioner according to a first embodiment of the present invention.
{Fig. 2} Fig. 2 is a perspective view of a controller cooled by a refrigerant pipe that constitutes the above-described refrigeration cycle.
{Fig. 3} Fig. 3 is a perspective view of a portion of the above-described controller at which the refrigerant pipe is placed in contact therewith.
{Fig. 4} Fig. 4 is an exploded perspective view of the portion of the above-described controller at which the refrigerant pipe is placed in contact therewith.
{Fig. 5} Fig. 5 is a front view showing the placement of heat-generating components of the above-described controller.
{Fig. 6} Fig. 6 is a diagram showing a control flowchart for a condensation-prevention control portion of the above-described controller.
{Fig. 7} Fig. 7 is a diagram for explaining an example setting of a control target temperature for the condensation-prevention control portion of the above-described controller.
{Fig. 8} Fig. 8 is a perspective view of a controller according to a second embodiment of the present invention.
{Fig. 9} Fig. 9 is a front view of a controller according to a third embodiment of the present invention.

{Description of Embodiments}

Embodiments of the present invention will be described below with reference to the drawings.

{First Embodiment}

A first embodiment of the present invention will be described below by using Figs. 1 to 7.
Fig. 1 is a diagram showing a refrigeration cycle of an air conditioner according to this embodiment, and Fig. 2 is a perspective view of a controller cooled by a refrigerant pipe that constitutes the refrigeration cycle.
An air conditioner 1 is equipped with a compressor 2 that compresses refrigerant, a four-way switching valve 3 that switches the directions in which the refrigerant is circulated, an outdoor heat exchanger 5 that performs heat exchange between the refrigerant and outdoor air from an outdoor fan 4, an electronic expansion valve (expansion valve;

EEV) 6 that causes the refrigerant to adiabatically expand, an indoor heat exchanger 8 that performs heat exchange between the refrigerant and indoor air from an indoor fan 7, and an accumulator 9, and is provided with a reversible refrigeration cycle 11 in which these components are connected by using refrigerant pipes 10.

In addition, the air conditioner 1 is provided with a controller 12 that controls the operation of the air conditioner 1 based on an operation instruction from a remote controller or the like. The controller 12 has a built-in inverter that controls the rotational speed of the compressor 2, has a function for switching the four-way switching valve 3 in accordance with the operation mode and, additionally, for controlling the rotational speed of the outdoor fan 4, the rotational speed of the indoor fan 7, the degree-of-opening of the electronic expansion valve 6, and so forth, and has a basic configuration that is no different from that of known controllers.

Because the controller 12 has heat-generating components, such as a power transistor that constitutes the inverter or the like, it is necessary to cool the controller 12. As shown in Fig. 1, in this embodiment, a refrigerant pipe 10A is placed in contact with the controller 12 between the electronic expansion valve (EEV) 6 and the indoor heat exchanger 8 that constitute the refrigeration cycle 11; the controller 12 is cooled during cooling operation by means of low-pressure two-phase refrigerant that flows inside the refrigerant pipe 10A with the flow rate thereof reduced at the electronic expansion valve 6, and the controller 12 is cooled during heating operation by means of high-pressure liquid refrigerant that flows inside the refrigerant pipe 10A and that is condensed into liquid at the indoor heat exchanger 8.

Because the controller 12 is installed at an appropriate location on an outdoor unit of the air conditioner 1, the controller 12 is provided with a plurality of mounting surfaces 13, which are formed as vertical surfaces on which various control circuits, various control boards, electronic components, and so forth that constitute those circuits are provided, an installation flange 14, and so forth, as shown in Fig. 2. Here, cooling structures in the surroundings of heat-generating components, such as an active converter 15, a diode module 16, a power transistor 17, and so forth, for the inverter mounted in the controller 12 will mainly be described by using Figs. 2 to 5.

The active converter 15, the diode module 16, and the power transistor 17, described above, are provided on boards 18, 19, and 20, respectively, and these boards 18, 19, and 20 are securely installed on the mounting surfaces 13. At the back surfaces of the boards 18, 19, and 20, heat-conducting blocks (aluminum blocks) 21 and 22 that constitute heat sinks are placed in close contact therewith. The configuration of the heat-conducting block (aluminum block) 21 will be described below in detail based on Fig. 4. Note that the configuration of the heat-conducting block 22 is the same as that of the heat-conducting block 21, and thus, a description thereof will be omitted.

The heat-conducting block 21 is divided into two parts, namely, a plate-like first block 21A that is placed in contact with the boards 18 and 19 and a plate-like second block 21B that is placed in contact with the cooling refrigerant pipe 10A, and the first block 21A and the second block 21B can be coupled into a single unit via bolts or the like. Specifically, the first block 21A, which is one of the two divided parts of the heat-conducting block 21 that serves as a heat sink, is subassembled by being securely installed on the mounting surface 13 in a state in which the first block 21A is in close contact with the back surfaces of the boards 18 and 19, whereas the second block 21B is subassembled by being placed in contact with the refrigerant pipe 10A, and the first block 21A and the second block 21B can be coupled into a single unit on an assembly line.

Two semicircular grooves 21C along which the refrigerant pipe 10A bent into a U-shape is placed are formed at a surface of the second block 21B, and the refrigerant pipe 10A is fitted into the semicircular grooves 21C, the outside thereof is held by using a pressing metal fitting 23 and secured by means of bolts, and thus, the subassembly is completed by installing the refrigerant pipe 10A in the second block 21B in close contact therewith. Note that the application of grease is not hindered when installing the refrigerant pipe 10A. By doing so, the precision with which the refrigerant pipe 10A is installed in the heat-conducting block 21 is increased, and the heat conducting efficiency from the refrigerant pipe 10A to the heat-generating components on the boards 18 and 19, such as the active converter 15, the diode module 16, and so forth, is enhanced, thus increasing the cooling effect.

Note that, also regarding the board 20 on which the power transistor 17 is provided, it is possible to cool the power transistor 17, which is a heat-generating component, via the refrigerant pipe 10A in which the low-pressure two-phase refrigerant flows by configuring the heat-conducting block 22 in the same manner as the heat-conducting block 21.

In addition, as described above, in the case in which the controller 12 is cooled during cooling operation by placing the refrigerant pipe 10A, in which the low-pressure two-phase refrigerant whose flow rate is reduced at the electronic expansion valve (EEV) 6 flows, in contact with the controller 12, there is a risk of condensation occurring on a surface of the refrigerant pipe 10A when the room temperature is low and the pressure is low. If condensation occurs on the surface of the refrigerant pipe 10A, drain liquid from the condensation drips onto the electronic components, such as the active converter 15, the diode module 16, the power transistor 17, and so forth, the boards 18, 19, and 20 on which those components are provided, or other electrical components or circuits, which causes malfunctioning and becomes a cause of damage to the electronic components; therefore, it is necessary to prevent the occurrence of condensation.

In this embodiment, in order to prevent condensation at the refrigerant pipe 10A, the controller 12 is provided with a condensation-prevention control portion 24 (see Fig. 1). This condensation-prevention control portion 24 has a function of preventing the occurrence of condensation based on a control flowchart shown in Fig. 6.

Here, the condensation-prevention control portion 24 sequentially performs condensation prevention control in the sequence described below when an outdoor air temperature detected by an outdoor-temperature sensor 25 is equal to or greater than a setting value A (for example, -5 °C) and when a post-EEV refrigerant temperature detected by a refrigerant-temperature sensor 26 provided in the refrigerant pipe 10A between the electronic expansion valve (EEV) 6 and the controller 12 is equal to or less than target temperatures 1 to 4 that are set in advance with respect to the outdoor air temperature detected by the outdoor-temperature sensor 25, as shown in Fig. 7.

During a cooling mode, in Step S1, when "outdoor air temperature > setting value A (-5 °C)" and "post-EEV refrigerant temperature < target temperature 1" are detected, and a risk of condensation occurring on the refrigerant pipe 10A is detected, rotational-speed control (which increases the rotational speed) of the indoor fan 7 is executed in Step S2. By doing so, the post-EEV refrigerant temperature is increased to a temperature equal to or greater than the target temperature 1, thus preventing condensation. Even if the rotational-speed control (which increases the rotational speed) of the indoor fan 7 is executed, when the post-EEV refrigerant temperature detected by the refrigerant-temperature sensor 26 decreases and "post-EEV refrigerant temperature < target temperature 2" is detected in Step S3, rotational-speed control (which decreases the rotational speed) of the outdoor fan 4 is additionally executed in Step S4, thus increasing the post-EEV refrigerant temperature.

Similarly, when "post-EEV refrigerant temperature < target temperature 3" is detected in Step S5, degree-of-opening control (which increases the degree-of-opening) of the electronic expansion valve (EEV) 6 is executed in Step S6, and, if this does not prevent a decrease in the post-EEV refrigerant temperature and "the post-EEV refrigerant temperature < target temperature 4" is detected in Step S7, rotational-speed control (which decreases the rotational speed) of the compressor 2 is executed in Step S8. By doing so, the refrigerant temperature is increased and the condensation is prevented.

As has been described above, when the post-EEV refrigerant temperature detected by the refrigerant-temperature sensor 26 becomes equal to or less than the target temperatures 1 to 4, thus detecting the conditions for condensation to occur, the condensation-prevention control portion 24 sequentially executes the condensation prevention control in which the rotational-speed control (which increases the rotational speed) of the indoor fan 7, the rotational-speed control (which decreases the rotational speed) of the outdoor fan 4, the degree-of-opening control (which increases the degree-of-opening) of the electronic expansion valve (EEV) 6, and the rotational-speed control (which decreases the rotational speed) of the compressor 2 are executed in this sequence, thus preventing the occurrence of condensation on the refrigerant pipe 10A. In order to suppress as much as possible the influence of the condensation prevention control on the performance (cooling capacity), this sequence is set so as to be sequentially executed starting from a control having a low level of influence.

Note that, in the embodiment described above, the condensation-prevention control portion 24 sequentially executes the condensation prevention control in which the rotational-speed control (which increases the rotational speed) of the indoor fan 7, the rotational-speed control (which decreases the rotational speed) of the outdoor fan 4, the degree-of-opening control (which increases the degree-of-opening) of the electronic expansion valve (EEV) 6, and the rotational-speed control (which decreases the rotational speed) of the compressor 2 are executed in this sequence when the conditions for condensation to occur are detected; however, it is permissible to employ a configuration in which any one of the rotational-speed control (which increases the rotational speed) of the indoor fan 7, the rotational-speed control (which decreases the rotational speed) of the outdoor fan 4, the degree-of-opening control (which increases the degree-of-opening) of the electronic expansion valve (EEV) 6, and the rotational-speed control (which decreases the rotational speed) of the compressor 2 is executed when the conditions for condensation to occur are detected.

In addition, in order to detect the conditions for condensation to occur, the post-EEV refrigerant temperature is detected by providing the refrigerant-temperature sensor 26 in the refrigerant pipe 10A; however, it is permissible to employ a configuration in which this refrigerant-temperature sensor 26 is omitted and the condensation prevention control described above is performed by detecting, by using an existing temperature sensor, a temperature or the like that can be substituted for the post-EEV refrigerant temperature. As a pseudo post-EEV refrigerant temperature, for example, a pseudo post-EEV refrigerant temperature may be calculated by using Expression (1) below based on detected values of the outdoor-heat-exchange temperature sensor 27 provided in the outdoor heat exchanger 5 and those of the indoor-heat-exchange temperature sensor 28 provided in the indoor heat exchanger 8, and the calculated pseudo post-EEV refrigerant temperature may be used in the condensation prevention control described above.

$$\text{pseudo post-EEV refrigerant temperature = indoor-heat-exchange temperature + (outdoor-heat-exchange temperature - indoor-heat-exchange temperature ) × C (where, C is a constant)} \quad (1)$$

With this embodiment, the configuration described above affords the following operational effects.

In the air conditioner 1 described above, during cooling operation, the refrigerant compressed at the compressor 2 is circulated, by means of the four-way switching valve 3, through the outdoor heat exchanger 5, the electronic expansion valve 6, the indoor heat exchanger 8, the four-way switching valve 3, the accumulator 9, and the compressor 2 in this order. During this time, the refrigerant that has been condensed into liquid by releasing heat to the outdoor air at the outdoor heat exchanger 5 is adiabatically expanded at the electronic expansion valve 6, is introduced into the indoor heat exchanger 8 in the form of low-pressure two-phase refrigerant, is evaporated at the indoor heat exchanger 8 by undergoing heat exchange with the indoor air blown thereinto by the indoor fan 7, and is, by cooling the indoor air, utilized in the cooling operation.

In addition, during heating operation, the refrigerant compressed by the compressor 2 is circulated via the four-way switching valve 3 through the indoor heat exchanger 8, the electronic expansion valve 6, the outdoor heat exchanger 5, the four-way switching valve 3, the accumulator 9, and the compressor 2 in this order. During this time, the refrigerant is condensed into liquid by releasing heat to the indoor air at the indoor heat exchanger 8, and is utilized in the heating operation by heating the indoor air.

During the cooling and heating operations described above, the controller 12 is cooled by the refrigerant that flows inside the refrigerant pipe 10A that connects the electronic expansion valve 6 and the indoor heat exchanger 8. This refrigerant that flows inside the refrigerant pipe 10A during cooling operation is the low-pressure two-phase refrigerant that is adiabatically expanded at the electronic expansion valve 6 and, during heating operation, it is the high-pressure liquid refrigerant that is condensed into liquid at the indoor heat exchanger 8, which have sufficiently low temperature relative to the heat-generating components provided in the controller 12, such as the active converter 15, the diode module 16, the power transistor 17, and so forth, thus allowing these heat-generating components to be cooled.

As described above, in the case in which the controller 12 is cooled by means of the high-pressure liquid refrigerant during heating operation and by means of the low-pressure two-phase refrigerant during cooling operation, during heating operation, the temperature of the high-pressure liquid refrigerant does not allow frost formation even if the outdoor air temperature is low, and therefore, there is no risk of frost forming on the refrigerant pipe 10A that cools the controller 12. On the other hand, during cooling operation, the temperature of the low-pressure refrigerant does not reach 0 °C or below under normal cooling conditions and the temperature of the refrigerant flowing into the controller 12 is assumed to normally reach 20 °C or greater due to pipe pressure loss or the like, and thus, there is no risk of condensation occurring; however, when the room temperature is low and the pressure is low, there could be a case in which condensation occurs.

With this embodiment, when there is a risk of condensation occurring on the surface of the refrigerant pipe 10A that cools the controller 12, in other words, when the conditions for condensation to occur are detected, the condensation-prevention control portion 24 performs the condensation prevention control in which any one of the rotational-speed control (which increases the rotational speed) of the indoor fan 7, the rotational-speed control (which decreases the rotational speed) of the outdoor fan 4, the degree-of-opening control (which increases the degree-of-opening) of the electronic expansion valve (EEV) 6, and the rotational-speed control (which decreases the rotational speed) of the compressor 2 is performed or the condensation prevention control in which the above controls are sequentially performed in the above sequence, thus making it possible to prevent the occurrence of condensation.

Therefore, it is possible to reliably prevent the occurrence of condensation on the refrigerant pipe 10A that cools the controller 12, it is possible to increase the cooling function of the controller 12, for which there is a demand for enhancing the cooling performance due to an increase in the capacities of the inverter and the power device, while preventing, in the controller 12, the occurrence of malfunctioning, damage to the electronic components, or the like, due to drain liquid generated by condensation dripping thereonto, and thus, it is possible to enhance the product quality and reliability.

On the other hand, at the controller 12, the refrigerant pipe 10A is placed via the heat-conducting blocks 21 and 22 that serve as heat sinks so as to be in close contact with the back surfaces of the boards 18, 19, and 20 on which the heat-generating components, such as the active converter 15, the diode module 16, the power transistor 17, and so forth, are provided. Thus, the heat-conducting block 21 (similar for the heat-conducting block 22) is divided into two parts, namely, the first block 21A that is placed in contact with the heat-generating components and the second block 21B that is placed in contact with the refrigerant pipe 10A, and the two divided parts, that is, the first block 21A and the second block 21B can be assembled into a single unit.

Because of this, at the controller 12, although it is considerably difficult to place the refrigerant pipe 10A in close contact with the heat-conducting block 21 on the assembly line, which is placed in contact with the heat-generating components, it is possible to relatively easily place the refrigerant pipe 10A in close contact with the heat-conducting block 21 by placing the two divided parts, that is, the first block 21A and the second block 21B in close contact with the heat-generating components and the refrigerant pipe 10A, respectively, thus subassembling them in advance, and by assembling the first block 21A and the second block 21B into a single unit on the assembly line. Therefore, it is possible to enhance the heat conducting efficiency by reducing the thermal contact resistance of the refrigerant pipe 10A with respect to the heat-conducting blocks 21 and 22, and it is possible to enhance the product quality and reliability by increasing the cooling performance for cooling the heat-generating components of the controller 12.

In addition, in this embodiment, the semicircular grooves 21C along which the refrigerant pipe 10A is placed are provided in the second block 21B. Because of this, by placing the refrigerant pipe 10A along the semicircular grooves 21C in the second block 21B and by securing them via the pressing metal fitting 23 or the like, it is possible to reliably place the refrigerant pipe 10A in close contact with the second block 21B, and, by doing so, it is possible to increase the heat conducting efficiency between the refrigerant pipe 10A and the heat-conducting block 21, and consequently, between the refrigerant pipe 10A and the controller 12, which makes it possible to further enhance the cooling performance for cooling the controller 12 and the heat-generating components thereof.

Note that the configuration in which the heat-conducting block 21 that serves as a heat sink is divided into two parts and in which the refrigerant pipe 10A is placed in contact with the controller 12 via the heat-conducting block 21 that is divided into two parts, as described above, is not limited to the system in which the refrigerant pipe 10A connecting the electronic expansion valve 6 and the indoor heat exchanger 8 is placed in contact with the controller 12, and this configuration can similarly be applied to a system in which a refrigerant pipe or the like connecting the electronic expansion valve 6 and the outdoor heat exchanger 5 is placed in contact with the controller 12 and in which the controller 12 is cooled during heating operation by means of the low-pressure two-phase refrigerant.

{Second Embodiment}

Next, a second embodiment of the present invention will be described by using Fig. 8.

This embodiment differs from the above-described first embodiment in that the refrigerant pipe 10A that is placed in contact with the controller 12 is placed at an angle. Because other aspects are the same as those of the first embodiment, descriptions thereof will be omitted.

As shown in Fig. 8, in this embodiment, the refrigerant pipe 10A is placed in the heat-conducting block 21 at an angle by providing the semicircular grooves 21C, which are provided in the second block 21B of the heat-conducting block 21, at a certain angle $\alpha$ with respect to a horizontal direction.

Note that it suffices that the inclination of the refrigerant pipe 10A be such that drain liquid flows in one direction, and, although the angle $\alpha$ is not particularly limited, several degrees above ten degrees would be sufficient. In addition, as shown in Fig. 1, this embodiment is not limited to the system in which the refrigerant pipe 10A connecting between the electronic expansion valve 6 and the indoor heat exchanger 8 is placed in contact with the controller 12, and it can be similarly applied to a system in which a refrigerant pipe or the like connecting the electronic expansion valve 6 and the outdoor heat exchanger 5 is placed in contact with the controller 12 and in which the controller 12 is cooled during heating operation by means of the low-pressure two-phase refrigerant.

As described above, by placing the refrigerant pipe 10A at an angle with respect to the controller 12, even if condensation or frost formation occurs on the surface of the refrigerant pipe 10A depending on the operating state, drain liquid from the condensation or frost can quickly be expelled in a specific direction along the inclination of the refrigerant pipe 10A placed at an angle. Therefore, it is possible to prevent the drain liquid from remaining on the controller 12, and it is also possible to protect the controller by preventing the occurrence of malfunctioning, damage to the electronic components, or the like, due to the drain liquid dripping onto the controller 12 or the electronic components thereof.

{Third Embodiment}

Next, a third embodiment of the present invention will be described by using Fig. 9.

This embodiment differs from the above-described first embodiment in that the placement of the heat-generating components provided in the controller 12 is changed. Because other aspects are the same as those of the first embodiment, descriptions thereof will be omitted.

As shown in Fig. 9, in this embodiment, the boards 18, 19, and 20 on which the heat-generating components, such as the active converter 15, the diode module 16, the power transistor 17, and so forth, are provided are placed so as to be concentrated in a lower portion of the controller 12, and the refrigerant pipe 10A is placed in contact with these boards 18, 19, and 20 by interposing the heat-conducting block 21 having the above-described configuration therebetween.

As shown in Fig. 1, in this case also, this embodiment is not limited to the system in which the refrigerant pipe 10A connecting the electronic expansion valve 6 and the indoor heat exchanger 8 is placed in contact with the controller 12, and it can similarly be applied to a system in which the refrigerant pipe or the like connecting the electronic expansion valve 6 and the outdoor heat exchanger 5 is placed in contact with the controller 12 and in which the controller 12 is cooled during heating operation by means of the low-pressure two-phase refrigerant.

As described above, because the heat-generating components provided in the controller 12 are placed so as to be concentrated in the lower portion of the controller 12 and the refrigerant pipe 10A is placed in contact with the lower portion, even if condensation or frost formation occurs on the surface of the refrigerant pipe 10A depending on the operating state, drain liquid from the condensation or frost does not drip onto other electronic components because no electronic components are placed in a lower portion below the heat-generating components. Therefore, it is possible to protect the controller by preventing the occurrence of malfunctioning, damage to the electronic components, or the like, due to the drain liquid dripping onto other electronic components provided in the controller.

Note that the present invention is not limited to the inventions according to the above-described embodiments, and appropriate modifications are possible within a range that does not depart from the scope thereof. For example, in the above-described embodiments, although the controller 12 has been described by using a unit having an open structure as an example, the structure of the controller 12 is not limited to those of the above-described embodiments, and it is needless to say that the present invention is similarly applicable to controllers having other structures such as a box structure or the like. In addition, in the above-described embodiments, although an example in which the post-EEV refrigerant temperature is directly detected by providing the refrigerant-temperature sensor 26 in the refrigerant pipe and an example in which a temperature that can be substituted for the post-EEV refrigerant temperature is detected as a pseudo temperature by using an existing temperature sensor have been described, naturally, the present invention is not limited to these two examples.

In the above-described embodiments, although an example of an air conditioner in which a reversible refrigeration cycle 11 that has a four-way switching valve 3 that switches the directions of the refrigerant is equipped has been described, the present invention is an air conditioner which does not have a four-way switching valve 3 and used for a cooling-only air conditioner or a heating-only air conditioner.

{Reference Signs List}

1 air conditioner
2 compressor
3 four-way switching valve
4 outdoor fan
5 outdoor heat exchanger
6 electronic expansion valve
7 indoor fan
8 indoor heat exchanger
10 refrigerant pipe
10A refrigerant pipe
11 refrigeration cycle
12 controller
15 active converter
16 diode module
17 power transistor
18, 19, 20 board
21, 22 heat-conducting block
21A first block
21B second block
21C semicircular groove
24 condensation-prevention control portion
25 outdoor-temperature sensor
26 refrigerant-temperature sensor
27 outdoor-heat-exchange temperature sensor

28 indoor-heat-exchange temperature sensor

**Claims**

1. An air conditioner equipped with a refrigeration cycle in which a compressor (2), an outdoor heat exchanger (5), an electronic expansion valve (6), and an indoor heat exchanger (8) are connected by using refrigerant pipes (10A) and a controller (12) that is cooled by being in contact with a refrigerant pipe (10A) in which low-pressure two-phase refrigerant whose flow rate is reduced at the electronic expansion valve (6) flows, the air conditioner comprising:

   a condensation-prevention control portion (24) that, when a condition for condensation to occur on the refrigerant pipe (10A) that cools the controller (12) is detected, prevents the occurrence of condensation by means of any one of rotational-speed control of an indoor fan (7), rotational-speed control of an outdoor fan (4), degree-of-opening control of the electronic expansion valve (6), and rotational-speed control of the compressor (2),
   **characterised in that**,
   when performing the control for preventing the occurrence of condensation, with reference to a refrigerant temperature that is set in advance in accordance with the outdoor air temperature or a target temperature of a substitute temperature thereof, the condensation-prevention control portion (24) sequentially performs the condensation prevention control in which the rotational-speed control of an indoor fan (7), the rotational-speed control of an outdoor fan (4), the degree-of-opening control of the electronic expansion valve (6), and the rotational-speed control of the compressor (2) are performed in this sequence.

2. An air conditioner according to claim 1, wherein

   the refrigeration cycle is a reversible refrigeration cycle;
   the refrigeration cycle comprises a four-way switching valve (3), and
   the controller (12) is cooled during cooling operation.

3. An air conditioner according to claim 1 or 2, wherein the refrigerant pipe (10A) is placed against a heat-generating component (15, 16) of the controller (12) via a heat-conducting block (21); the heat-conducting block (21) is divided into two parts, namely, a first block (21A) that is placed in contact with the heat-generating component (15, 16) and a second block (21B) that is placed in contact with the refrigerant pipe (10A); and the two divided parts, that is, the first block (21A) and the second block (21B), can be assembled into a single block (21).

4. An air conditioner according to Claim 3, wherein the second block (21B) is provided with a semicircular groove (21C) along which the refrigerant pipe (10A) is placed.

**Patentansprüche**

1. Klimaanlage, die mit einem Kühlkreis, in dem ein Verdichter (2), ein Außenwärmetauscher (5), ein elektronisches Expansionsventil (6) und ein Innenwärmetauscher (8) unter Verwendung von Kältemittelleitungen (10A) verbunden sind, und einer Steuerung (12), die gekühlt wird, indem sie mit einer Kältemittelleitung (10A) in Kontakt ist, in der ein Niederdruckzweiphasenkältemittel fließt, dessen Durchflussrate am elektronischen Expansionsventil (6) reduziert wird, ausgerüstet ist, wobei die Klimaanlage Folgendes umfasst:

   einen Kondensationsverhinderungssteuerabschnitt (24), der, wenn ein Zustand, in dem eine Kondensation an der Kältemittelleitung (10A) auftritt, die die Steuerung (12) kühlt, detektiert wird, das Auftreten einer Kondensation mittels eines von einer Drehzahlsteuerung eines Innenlüfters (7), einer Drehzahlsteuerung eines Außenlüfters (4), einer Öffnungsgradsteuerung des elektronischen Expansionsventils (6) und einer Drehzahlsteuerung des Verdichters (2) verhindert,
   **dadurch gekennzeichnet, dass**
   der Kondensationsverhinderungssteuerabschnitt (24), wenn er die Steuerung zum Verhindern des Auftretens einer Kondensation durchführt, mit Bezug auf eine Kältemitteltemperatur, die vorab gemäß der Außenlufttemperatur oder einer Solltemperatur einer Ersatztemperatur davon eingestellt wird, nacheinander die Kondensationsverhinderungssteuerung durchführt, bei der die Drehzahlsteuerung eines Innenlüfters (7), die Drehzahlsteuerung eines Außenlüfters (4), die Öffnungsgradsteuerung des elektronischen Expansionsventils (6) und die Drehzahlsteuerung des Verdichters (2) in Reihenfolge durchgeführt werden.

**2.** Klimaanlage nach Anspruch 1, wobei
der Kühlkreis ein reversibler Kühlkreis ist;
der Kühlkreis ein Vierwegeumschaltventil (3) umfasst und
die Steuerung (12) während des Kühlbetriebs gekühlt wird.

**3.** Klimaanlage nach Anspruch 1 oder 2, wobei die Kältemittelleitung (10A) via einen Wärmeleitungsblock (21) gegen eine wärmeerzeugende Komponente (15, 16) der Steuerung (12) platziert ist; der Wärmeleitungsblock (21) in zwei Teile geteilt ist, nämlich einen ersten Block (21A), der mit der wärmeerzeugenden Komponente (15, 16) in Kontakt platziert ist, und einen zweiten Block (21B), der mit der Kältemittelleitung (10A) in Kontakt platziert ist; und die zwei geteilten Teile, das heißt der erste Block (21A) und der zweite Block (21B) zu einem einzigen Block (21) zusammengesetzt werden können.

**4.** Klimaanlage nach Anspruch 3, wobei der zweite Block (21B) mit einer halbkreisförmigen Nut (21C) versehen ist, entlang der die Kältemittelleitung (10A) platziert ist.

**Revendications**

**1.** Climatiseur équipé d'un cycle de réfrigération dans lequel un compresseur (2), un échangeur de chaleur extérieur (5), un détendeur électronique (6) et un échangeur de chaleur intérieur (8) sont raccordés au moyen de conduites de réfrigérant (10A), et d'un appareil de commande (12) qui est refroidi en étant au contact d'une conduite de réfrigérant (10A) dans lequel s'écoule un réfrigérant diphasique à basse pression dont le débit est réduit au niveau du détendeur électronique (6), le climatiseur comprenant :

une partie de commande anti-condensation (24) qui, lorsqu'une condition de formation de condensation sur la conduite de réfrigérant (10A) qui refroidit le régulateur (12) est détectée, empêche la formation de la condensation au moyen d'une commande quelconque parmi une commande de vitesse de rotation d'un ventilateur intérieur (7), une commande de vitesse de rotation d'un ventilateur extérieur (4), une commande de degré d'ouverture du détendeur électronique (6), et une commande de vitesse de rotation du compresseur (2),
**caractérisé en ce que** :
lors de la réalisation de la commande destinée à empêcher la formation de la condensation, en référence à une température de réfrigérant qui est réglée à l'avance en fonction de la température de l'air extérieur ou d'une température cible d'une température de substitution de celle-ci, la partie de commande anti-condensation (24) effectue de manière séquentielle la commande anti-condensation dans laquelle la commande de vitesse de rotation d'un ventilateur intérieur (7), la commande de vitesse de rotation d'un ventilateur extérieur (4), la commande de degré d'ouverture du détendeur électronique (6) et la commande de vitesse de rotation du compresseur (2) sont effectuées dans cet ordre.

**2.** Climatiseur selon la revendication 1, dans lequel :

le cycle de réfrigération est un cycle de réfrigération réversible ;
le cycle de réfrigération comprend une vanne de commutation à quatre voies (3), et
l'appareil de commande (12) est refroidi au cours de l'opération de refroidissement.

**3.** Climatiseur selon la revendication 1 ou 2, dans lequel la conduite de réfrigérant (10A) est placée contre un composant produisant de la chaleur (15, 16) de l'appareil de commande (12) par l'intermédiaire d'un bloc thermoconducteur (21) ; le bloc thermoconducteur (21) est divisé en deux parties, à savoir : un premier bloc (21A) qui est placé au contact du composant produisant de la chaleur (15, 16) et un second bloc (21B) qui est placé au contact de la conduite de réfrigérant (10A) ; et les deux parties divisées, c'est-à-dire le premier bloc (21A) et le second bloc (21B), peuvent être réunies en un seul bloc (21).

**4.** Climatiseur selon la revendication 3, dans lequel le second bloc (21B) est pourvu d'une rainure semi-circulaire (21C) le long de laquelle est placée la conduite de réfrigérant (10A).

FIG. 1

EP 2 876 385 B1

# FIG. 2

FIG. 3

FIG. 4

EP 2 876 385 B1

FIG. 5

# FIG. 6

```
┌─────────────────────────────────────────┐
│              COOLING MODE                │
└─────────────────────────────────────────┘
                    │
                    ▼
┌─────────────────────────────────────────┐
│        OUTDOOR AIR TEMPERATURE           │
│  > A (ex -5 °C) AND POST-EEV             │──── S1
│        REFRIGERANT TEMPERATURE           │
│        < TARGET TEMPERATURE 1            │
└─────────────────────────────────────────┘
                    │
                    ▼
┌─────────────────────────────────────────┐
│          ROTATIONAL SPEED OF             │
│        INDOOR FAN IS INCREASED           │──── S2
└─────────────────────────────────────────┘
                    │
                    ▼
┌─────────────────────────────────────────┐
│     POST-EEV REFRIGERANT TEMPERATURE     │──── S3
│        < TARGET TEMPERATURE 2            │
└─────────────────────────────────────────┘
                    │
                    ▼
┌─────────────────────────────────────────┐
│          ROTATIONAL SPEED OF             │
│        OUTDOOR FAN IS DECREASED          │──── S4
└─────────────────────────────────────────┘
                    │
                    ▼
┌─────────────────────────────────────────┐
│     POST-EEV REFRIGERANT TEMPERATURE     │──── S5
│        < TARGET TEMPERATURE 3            │
└─────────────────────────────────────────┘
                    │
                    ▼
┌─────────────────────────────────────────┐
│              EEV IS OPENED               │──── S6
└─────────────────────────────────────────┘
                    │
                    ▼
┌─────────────────────────────────────────┐
│     POST-EEV REFRIGERANT TEMPERATURE     │──── S7
│        < TARGET TEMPERATURE 4            │
└─────────────────────────────────────────┘
                    │
                    ▼
┌─────────────────────────────────────────┐
│          ROTATIONAL SPEED OF             │
│        COMPRESSOR IS DECREASED           │──── S8
└─────────────────────────────────────────┘
```

FIG. 7

TARGET TEMPERATURE 1
TARGET TEMPERATURE 2
TARGET TEMPERATURE 3
TARGET TEMPERATURE 4

OUTDOOR AIR TEMPERATURE

EP 2 876 385 B1

# FIG. 8

# FIG. 9

**EP 2 876 385 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2518422 A
- EP 2314940 A
- JP 2008101862 A